# EUROPEAN PATENT SPECIFICATION

(11) **EP 3 819 155 B1**
(45) Date of publication and mention of the grant of the patent: **22.03.2023**
(21) Application number: 19208049.7
(22) Date of filing: 08.11.2019
(51) Int. Cl.: B60K 35/00

(54) **DISPLAY DEVICE FOR A VEHICLE INTERIOR INCLUDING A CROSS CAR BEAM**
ANZEIGEVORRICHTUNG FÜR EINEN FAHRZEUGINNENRAUM MIT EINEM FAHRZEUGÜBERGREIFENDEN TRÄGER
DISPOSITIF D'AFFICHAGE POUR UN HABITACLE DE VÉHICULE COMPRENANT UNE POUTRE TRANSVERSALE DE VOITURE

(43) Date of publication of application: 12.05.2021
(73) Proprietor: Volvo Car Corporation, 40531 Göteborg (SE)
(72) Inventor: GÖTHLIN, Jonas, SE-423 43 TORSLANDA (SE); BERGMAN, Magnus, SE-405 31 GÖTEBORG (SE)
(74) Representative: Kransell & Wennborg KB

(56) References cited:
- DE-A1-102013 013 356
- DE-A1-102015 219 787
- DE-A1-102018 201 796
- US-A1- 2019 045 117

## Description

### TECHNICAL FIELD

The present invention generally relates to display device for a vehicle interior, and to cross-car beam of a vehicle.

### BACKGROUND

Vehicle are being equipped with an increasing amount of equipment ranging from advanced infotainment systems to interior design features. Furthermore, the equipment especially related to the infotainment systems are claiming more and more space.

Infotainment systems often include a display of some kind. A display may be mounted as a separate part on the center console of the vehicle. In some cases, the display is integrated in the center console. US2019/0045117 discloses a display screen and a motor vehicle. Further examples of displays in vehicles are described in DE102018201796, and DE102015219787. DE102013013356 discloses an instrument panel for a vehicle.

As the size of the displays in vehicles are becoming larger, it becomes more complicated to integrate or mount the display in a suitable location without disrupting other functions or structures in the vehicle. Vehicles are structurally complex and must include mounting supports for various devices at the same time as providing structural integrity for the vehicle and a safe crash behavior in the event of a collision.

Accordingly, there is a need for improved ways of integrating displays in vehicle interiors.

### SUMMARY

The present invention generally relates to a display device for a vehicle interior that is integrable without compromising the structural integrity of the vehicle. In particular, the display device may be relatively large and still not compromise the structural integrity of the vehicle. Further, the herein proposed display device may also provide for fewer separate parts in the vehicle interior.

A display device as disclosed herein comprises a matrix of color controllable light emitting units covered by an at least partly transparent cover. Further, the display device comprises a back-cover for mechanically supporting the matrix of color controllable light emitting units, and for covering the side of the matrix of color controllable light emitting units opposite the side of the transparent cover. The matrix of color controllable light emitting units is interleaved between the at least partly transparent cover and the back-cover.

With regards to the above advantages, the inventors propose that the back-cover is a cross-car beam of the vehicle.

In prior art displays, a back cover is often provided as a plastic housing part. The prior art display is attached to a dedicated rack or similar structure in the instrument panel. When the display is large, this becomes cumbersome. Therefore, the inventors propose a display device in which the back cover constitutes a cross-car beam, in other words, the matrix of color controllable light emitting units is attached on the cross-car beam without any additional back covers between the cross-car beam the matrix. In this way, may the cross-car beam which is configured to provide structural integrity for the vehicle body, serve also as a back-cover for the matrix of color controllable light emitting units. It can further be considered that the display device provides for displaying information to users of the vehicle, and further provides for contributing to the structural integrity of the vehicle, and in addition contributes to a desired crash behavior of the vehicle.

Accordingly, the matrix of color controllable light emitting units may be attached to the cross-car beam whereby the cross-car beam is configured as a housing for accommodating the matrix of color controllable light emitting units. Of course, other electric circuitry for controlling the controllable light emitting units may be accommodated between the matrix of controllable light emitting units and the cross-car beam.

A color controllable light emitting unit may generally be provided as a pixel of the display. The matrix generally provides for a distribution of the controllable light emitting units across an area. The matrix of the controllable light emitting units may be arranged in a plane. The matrix of the controllable light emitting units may be arranged to form a curved surface facing the direction in which light is emitted, towards a user viewing the display device.

In one embodiment, the cross-car beam may be adapted to reach from side-to-side in the vehicle. Further, the matrix of color controllable light emitting units may be adapted to reach substantially the entire width of the cross-car beam in the side-to-side direction of the vehicle. In other words, the herein proposed display device may advantageously be a large display that reaches from side-to-side in the vehicle interior, substantially covering the entire width of the vehicle interior. This is possible in a relatively straight-forward way due to the integration with the cross-car beam that reaches across the entire width of the vehicle.

Further features of, and advantages with, the embodiments of the present invention will become apparent when studying the appended claims and the following description.

### BRIEF DESCRIPTION OF DRAWINGS

These and other aspects of the present invention will now be described in more detail, with reference to the appended drawings showing example embodiments of the invention, wherein:
FIG. 1 is an exploded view of a conceptual a display device according to embodiments of the present invention;
FIG. 2 conceptual illustration of a display device according to embodiments of the present invention;
FIG. 3A is a conceptual illustration of a cross-car beam according to embodiments of the present invention;
FIG. 3B is a conceptual illustration of a cross-car beam according to embodiments of the present invention; and
FIG. 4 conceptually illustrates a display device integrated in a vehicle interior according to embodiments of the present invention.

### DETAILED DESCRIPTION

In the present detailed description, various embodiments of a display device and a cross-car beam according to the present invention are described. However, the display device and a the cross-car beam may be embodied in many different forms and should not be construed as limited to the embodiments set forth herein; rather, these embodiments are provided for thoroughness and completeness, and to fully convey the scope of the present invention to the skilled person. Like reference characters refer to like elements throughout.

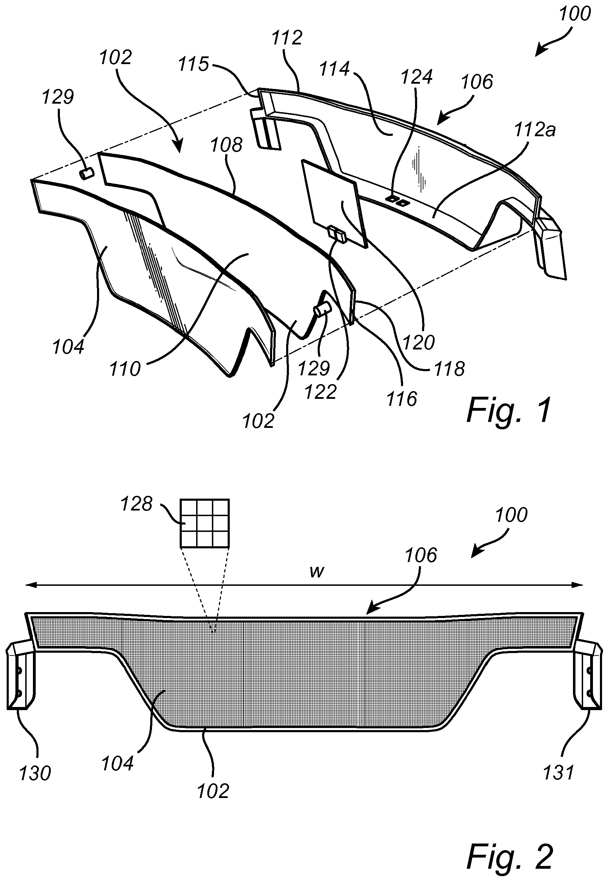

Fig. 1 illustrates an exploded view of a conceptual display device 100 according to embodiments of the present invention. The display device 100 is adapted to be arranged in a vehicle interior as will be described with reference to subsequent drawings. The display device 100 comprising a matrix 102 of color controllable light emitting units covered by an at least partly transparent cover 104. The display device 100 further comprises a back-cover 106 for mechanically supporting the matrix 102 of color controllable light emitting units, and for covering the side 108 of the matrix 102 of color controllable light emitting units opposite the side 110 of the transparent cover 104. The matrix 102 of color controllable light emitting units is interleaved between the at least partly transparent cover 110 and the back-cover 106. The back-cover is a cross-car beam 106 of the vehicle body.

Accordingly, the inventors realized that the cross-car beam can serve as a back-cover for a display device. This insight provides for integrating displays in the vehicle interior without compromising the structural integrity of the vehicle. In fact, the display device contributes to the structural integrity since the display device includes a cross-car beam. Furthermore, a cross-car beam has wide extension in the cross-car direction, thereby enabling for a wide matrix of color controllable light emitting units to be installed in the cross-car beam opening for larger display devices in vehicles.

The cross-car beam may be adapted for absorbing impact energy in the event of a collision. Accordingly, the cross-car beam may be adapted for causing a desired behavior of the vehicle structure in the event of a collision. For example, the cross-car beam may be adapted to bend in a predictive way in order to absorb energy in a collision. The cross-car beam is configured to prevent the vehicle cabin to collapse in crash. The cross-car beam is here shown to have a curved general shape as an example. The cross-car beam may equally well have a straight general shape. The cross-car beam may be arranged in the vehicle for absorbing impact energy in the event of a collision. Thus, the cross-car beam may be attached to the vehicle body, or optionally be part of the vehicle body, for absorbing impact energy in the event of a collision.

The cross-car beam 106 is adapted to reach from side-to-side in the vehicle. The term side-to-side means along an axis perpendicular to a vehicle heading, e.g. from left-to-right of the vehicle is considered side-to-side.

In the presently described embodiment, the cross-car beam 106 includes a frame 112, e.g. a frame structure, adapted to surround the periphery of the matrix 102 of color controllable light emitting units. The frame 112 forms an edge or flange that extends at an angle from a main cover body 114 of the cross-car beam 106. The cross-car beam 106 thus includes a main body 114 that is adapted to cover the back side 108 of the matrix 102 of color controllable light emitting units such that the matrix 102 of color controllable light emitting units is protected at the back side 108. The frame 112 edge or flange extends a distance from the main body, where the distance is equal to or greater than the thickness 116 of the matrix 102 of color controllable light emitting units. The thickness 116 of the matrix 102 of color controllable light emitting units is from the front side 110 to the back side 108 along an axis perpendicular to the front side 110 and to the back side 108 of the matrix 102 of color controllable light emitting units.

The frame 112 may be shaped so that the matrix 102 of color controllable light emitting units fits within the frame 112. Thereby, the cross-car beam frame 112 covers the edge 118 or short face defining the thickness of the matrix 102 of color controllable light emitting units, and the back side 108.

The at least partly transparent cover 104 may be attached to the frame 112, on a face 115 of the frame 112 facing the least partly transparent cover 104. Thereby, the cross-car beam and the at least partly transparent cover 104 enclose the matrix 102 of color controllable light emitting units.

The at least partly transparent cover 104 may be attached to the frame 112 by known attachments means such as screws, bolts, adhesives, or by an external frame that clips onto the frame 112 and maintains the cover 104 in place. However, attachment means for attaching a cover on a display are known *per se* and will not be described further herein.

In fig. 1, the matrix 102 of color controllable light emitting units is curve shaped, i.e. the shape of the matrix 102 of color controllable light emitting units may be defined by at least one radius of curvature. Further, the cross-car beam 106 is also curve-shaped. Accordingly, the main body 114 is curve-shaped and the frame 112 follows the outline of the main body 114, also in a curved shape. Accordingly, in some embodiments, a shape of the cross-car beam substantially matches a shape of the matrix of color controllable light emitting units at the interface between the cross-car beam and the matrix of color controllable light emitting units. This ensures for a tight fit between the cross-car beam and the matrix 102 of color controllable light emitting units. In other embodiments, the cross-car beam may have a generally straight shape, in particular the main body 114 may be planar, whereby the matrix 102 of color controllable light emitting units is planar.

Furthermore, the shape of the at least partly transparent cover 104 is adapted to match the shape of the front side 110 of the matrix 102 of color controllable light emitting units, facing the at least partly transparent cover 104 to in this way be arranged in close contact with the front side 110.

The at least partly transparent cover 104 is a see-through cover arranged to protect the front side 110 of the matrix 102 of color controllable light emitting units from mechanical damage. The at least partly transparent cover 104 may include optical filters. However, the at least partly transparent cover 104 is adapted such that the matrix 102 of color controllable light emitting units can transmit visible light through the at least partly transparent cover 104 so that the visible light is emitted from the front side 110 towards a user facing the front side 110. The at least partly transparent cover 104 may for example be made from glass, e.g. clear glass. The emitted light is transmitted through the material, e.g. the glass, of the at least partly transparent cover 104. The at least partly transparent cover 104 may be attached in contact with the front side 110 of the matrix 102 of color controllable light emitting units.

The matrix 102 of color controllable light emitting units may be directly attached to the cross-car beam 106. In other words, the matrix 102 of color controllable light emitting units may abut against the cross-car beam 106. It is the back side 108 of the matrix 102 of color controllable light emitting units that may abut directly against the main body 114 of the cross-car beam 106. Thereby, a compact integration of the matrix 102 of color controllable light emitting units in the cross-car beam 106 is provided.

The matrix 102 of color controllable light emitting units is attached to the cross-car beam 106 by attachments means such as e.g. screws, bolts, nuts, pin bolts, adhesives, or other means known *per se* to the skilled person.

The frame 112 and the main body 114 together may form a recess. Thus, the cross-car beam may include a recess for receiving the matrix of color controllable light emitting units.

The color controllable light emitting units may include pixel elements of various types adapted to emit color controllable light. The matrix 102 of color controllable light emitting units may further include e.g. optical filters such as polarizing filters, glass substrates, reflective surfaces, or other components necessary for the structure and function of a display. For example, the color controllable light emitting units may be pixel elements of types including liquid crystal display pixels elements, light emitting diode pixel elements, organic light emitting diode pixel elements. Thus, the matrix 102 of color controllable light emitting units may be a display including liquid crystal display pixels elements. In other possible implementations, the matrix 102 of color controllable light emitting units may be a display including light emitting diode pixel elements. In other possible implementations, the matrix 102 of color controllable light emitting units may be a display including organic light emitting diode pixel elements.

The cross-car beam 106 may be adapted to receive and accommodate electronic circuitry, see Fig. 1. The electronic circuitry may for example be arranged on a printed circuit board 120 and attached via attachment components 122 to attachment points 124 of the cross-car beam 106. For example, the attachment component 122 may include threaded holes, whereby a screw or bolt is attached thereto through holes 124 in the cross-car beam 106. However, other possibilities exist, and are within the scope of the application, for attaching the printed circuit board 120 in the cross-car beam, such as for example gluing.

The electronic circuitry includes for example control units for controlling the matrix 102 of color controllable light emitting units to display information visible to vehicle occupants.

The printed circuit board 120 is attached to the frame 112, here exemplified at a bottom part 112a of the frame 112, such that the printed circuit board 120 is arranged standing up, e.g. with its main plane arranged facing the main body 114 of the cross-car beam, and facing the back side 108 of the matrix 102 of color controllable light emitting units. The "bottom" refers to the substantially horizontal, e.g. a small deviation is allowed, and vertically lowest part of the frame when the cross-car beam is mounted in a vehicle.

Electrical wiring for communication with the electronic circuitry 120 may access the electronic circuitry 120 through the through holes 124 in the bottom part 112a or bottom flange of the frame 112 of the cross-car beam 106. Thus, the through holes 124 may be adapted as feed-throughs for electric wiring connectable to the electronic circuitry 120. The electric wiring enables for control units of vehicle systems such as entertainment sub systems or infotainment sub-systems to send electronic signals to or receive electronic signals from the display device electronic circuitry 120. Such electronic signals may relate to information to be shown with the matrix of color controllable light emitting units.

In some possible and optional implementations, image capturing devices 129 are arranged covered by the at least partly transparent cover 104. In other embodiments may image capturing devices 129 be arranged in openings (not shown) in the at least partly transparent cover 104. The image capturing devices 129 may be configured to capture video-streams or individual images of the scene inside the vehicle, i.e. the image capturing devices 129 are facing the occupants in the vehicle. The image capturing devices 129, e.g. CCD cameras, may be used for e.g. eye-tracking or face-tracking. The image capturing devices 129 are only conceptually shown here and the shape, size and configuration may differ significantly from what is herein depicted.

Fig. 2 illustrates a display device 100 having the matrix 102 of color controllable light emitting units installed in the cross-car beam 106, and the at least partly transparent cover 104 is arranged to cover the matrix 102 of color controllable light emitting units. There is further shown a close-up of a plurality of color controllable light emitting units of which one is numbered 128. The matrix 102 of color controllable light emitting units is here adapted to reach a width *W* which is substantially the entire width of the cross-car beam 106 in the side-to-side direction of the vehicle. The matrix 102 of color controllable light emitting units reaches across substantially the entire width of the cross-car beam 106 excluding the attachment portions 130, 131 adapted for mounting of the cross-car beam 106 to a vehicle body. Thereby providing for a wide display device which is able to display a relatively large amount of information. For example, the screen may include screen portions used for electronic rear-view mirrors, e.g. left side mirror, right side mirror, and center mirror. Such electronic rear-view mirrors may replace or complement the traditional mirrors.

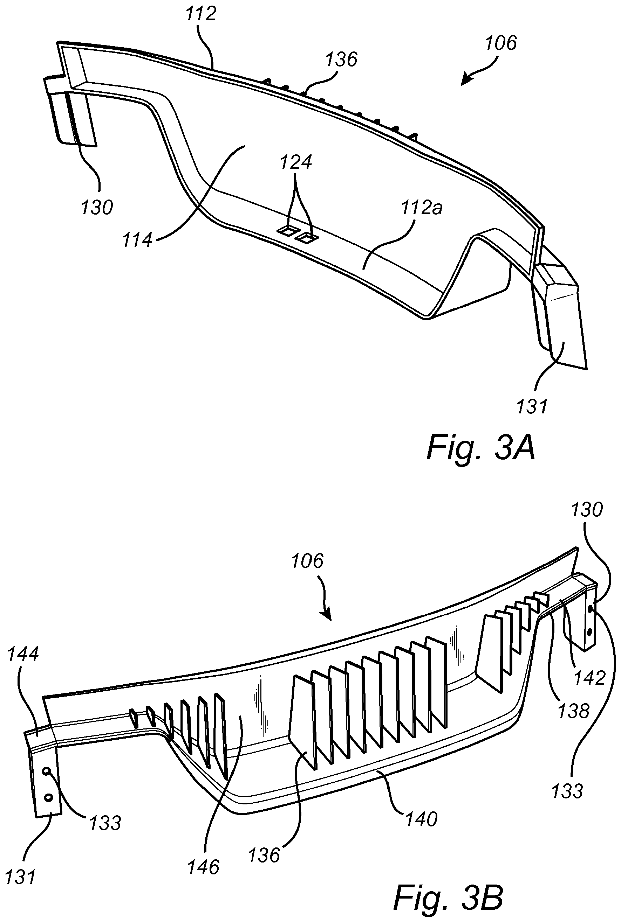

Fig. 3A-B illustrates two views of a cross-car 106 beam according to embodiments of the present invention. The cross-car beam 106 is adapted for mechanically supporting a matrix of color controllable light emitting units and for covering a back side of the matrix of color controllable light emitting units, wherein the matrix of color controllable light emitting units is interleaved between an at least partly transparent cover and the cross-car beam 106.

The cross-car beam 106 may be made by e.g. extrusion or molding. Preferably, the cross-car beam 106 may be made from magnesium for reducing the weight of the beam 106.

Fig. 3A illustrates a frame 112 formed as flange adapted to surround the periphery of the main body 114 where the matrix of color controllable light emitting units is arrangeable. The frame 112 and the main body 114 forms a recess in which the matrix of color controllable light emitting units may be arranged.

The cross-car beam 106 further includes attachment portions 130, 131 extending from the main body 114 for mounting of the cross-car beam 106 to a vehicle body. In this example embodiment, the attachment portions 130, 131 include holes 133, see fig. 3B, for bolting or screwing the cross-car beam to the vehicle body. The cross-car beam is adapted to be arranged in a lateral orientation in the vehicle, i.e. along a side-to-side direction of the vehicle. The attachment portions 130, 131 as here depicted extend downwards from the main body 114, when the cross-car beam is arranged in a vehicle, although other orientations of the attachment portions 130, 131 are possible depending on the specific implementation. The attachment portions 130, 131 may extend from the frame 112.

Fig. 3B illustrates a rear-side of the cross-car beam 106. The cross-car beam 106 is here shown to include a set of flanges 136 of which one is numbered. The flanges 136 are adapted as cooling flanges for improving the cooling of the matrix of color controllable light emitting units that is arrangeable on the opposite side of the main body 114. Generally, flanges 136 increase the surface area in contact with surrounding ambient air to thereby improve the heat exchange with the ambient air for the component attached to the flanges.

The flanges 136 are attached to a shoulder 138 of the cross-car beam 106 which includes a center valley portion 140 neighboring side shoulder portions 142 and 144. At least a portion of the flanges 136 are attached to the valley shoulder portion 140. The flanges 136 are generally planar, and plate shaped and arranged with their main planes in parallel although this is not strictly required. The valley shoulder portion 140 is adapted to receive cooling air from the climate system of the vehicle, for example from a defroster air vent arranged adjacent a windshield. The air from the climate system passes in between the flanges so that heat may be exchanged between the flanges and the air. Preferably, the flanges 136 are attached to the rear side 146 of the main body 114 to improve the heat transfer from the matrix of color controllable light emitting units arranged on the other side of the main body 114, to the flanges 136.

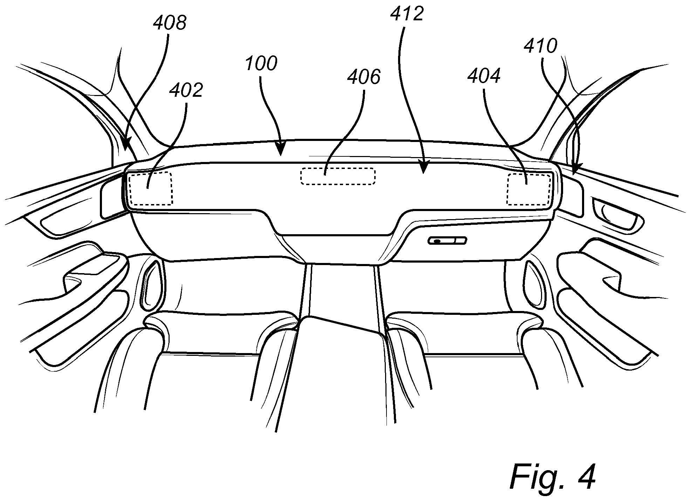

Fig. 4 illustrates a vehicle 400 comprising a display device 100. The display device 100 reaches substantially across the entire width of the vehicle interior. Further, the display device is here shown to include screen portions, i.e. portions of light emitting units, that are used for dedicated functions. For example, the left portion 402 may show a left rear view of the vehicle, serving as electronic left side rear view mirror, the right portion 404 may show a right rear view of the vehicle, serving as electronic right side rear view mirror, and the center portion 406 may show a center rear view of the vehicle, serving as electronic center rear view mirror.

The cross-car beam (not shown in fig. 4) of the display device 100 described with reference to preceding drawings, is adapted to mechanically support a matrix of color controllable light emitting units of the display device 100 and for covering a back side of the matrix of color controllable light emitting units, wherein the matrix of color controllable light emitting units is interleaved between an at least partly transparent cover and the cross-car beam.

The cross-car beam reaches from side to side of a vehicle body, i.e. the cross-car beam may be attached to a vehicle body structure on a first side 408 via attachment portion 130 and to a vehicle body structure on a second side 410 via attachment portion 131, see e.g. fig. 2, 3A-B. The cross-car beam is adapted to prevent the vehicle cabin 412 to collapse in the event of a crash. The matrix of color controllable light emitting units is adapted to reach substantially the entire width of the cross-car beam in the side-to-side direction of the vehicle, i.e. from the first side 408 to the second side 410. The display device extends along the width of the vehicle cabin 412, where the width is perpendicular to a vehicle heading axis.

There is further provided an electronic screen including a matrix 102 of color controllable light emitting units adapted to be covered by an at least partly transparent cover 104. The matrix 102 of color controllable light emitting units is adapted to be mechanically supported by a back-cover 106 arranged to cover the side 108 of the matrix 102 of color controllable light emitting units opposite the side 110 of the transparent cover 104, and to be interleaved between the at least partly transparent cover 104 and the back-cover 106. The back-cover 106 is a cross-car beam 106 of a vehicle.

The electronic screen may for example be a liquid crystal display, a light emitting diode display, or an organic light emitting diode display.

There is further provided a vehicle comprising any one of the herein disclosed display devices, and/or cross-car beams, and/or electronic screens.

A control unit may include a microprocessor, microcontroller, programmable digital signal processor or another programmable device, as well as be embedded into the vehicle/power train control logic/hardware. The control unit may also, or instead, include an application-specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device. The control unit may comprise modules in either hardware or software, or partially in hardware or software and communicate using known transmission buses such as CAN-bus and/or wireless communication capabilities.

In the claims, the word "comprising" does not exclude other elements or steps, and the indefinite article "a" or "an" does not exclude a plurality. A single processor or other control unit may fulfil the functions of several items recited in the claims. Any reference signs in the claims should not be construed as limiting the scope.

Various examples have been described.

## Claims

1. A display device (100) for a vehicle interior, the display device comprising:
a matrix (102) of color controllable light emitting units covered by an at least partly transparent cover (104); and
a back-cover (106) for mechanically supporting the matrix (102) of color controllable light emitting units, and for covering the side (108) of the matrix (102) of color controllable light emitting units opposite the side of the transparent cover (104), whereby the matrix (102) of color controllable light emitting units is interleaved between the at least partly transparent cover (104) and the back-cover (106), **characterized in that** the back-cover (106) is a cross-car beam (106) of the vehicle.

2. The display device (100) according to claim 1, wherein the cross-car beam (106) is adapted for absorbing impact energy in the event of a collision.

3. The display device (100) according to any one of claims 1 and 2, wherein the cross-car beam (106) is adapted to reach from side-to-side (408, 410) in the vehicle (400).

4. The display device (100) according to any one of the preceding claims, wherein the matrix (102) of color controllable light emitting units is adapted to reach substantially the entire width (w) of the cross-car beam (106) in the side-to-side (408, 410) direction of the vehicle (400).

5. The display device (100) according to any one of the preceding claims, wherein the cross-car beam (106) includes a frame (112) adapted to surround the periphery of the matrix (102) of color controllable light emitting units.

6. The display device (100) according to any one of the preceding claims, wherein the cross-car beam (106) includes a recess for receiving the matrix (102) of color controllable light emitting units.

7. The display device (100) according to any one of the preceding claims, wherein a shape of the cross-car beam (106) substantially matches a shape of the matrix (102) of color controllable light emitting units at the interface between the cross-car beam (106) and the matrix (102) of color controllable light emitting units.

8. The display device (100) according to any one of the preceding claims, wherein the matrix (102) of color controllable light emitting units is directly attached to the cross-car beam.

9. The display device (100) according to any one of the preceding claims, comprising cooling flanges (136) attached to the cross-car beam.

10. The display device (100) according to any one of the preceding claims, wherein the cross-car beam is a single piece.

11. The display device (100) according to any one of the preceding claims, wherein the matrix (102) of color controllable light emitting units is a liquid crystal display, or a light emitting diode display.

12. A vehicle (400) comprising the display device (100) according to any one of the preceding claims.

## Patentansprüche

1. Anzeigevorrichtung (100) für einen Fahrzeuginnenraum, wobei die Anzeigevorrichtung Folgendes umfasst:
eine Matrix (102) von farbsteuerbaren, Licht emittierenden Einheiten, abgedeckt durch eine zumindest teilweise transparente Abdeckung (104); und
eine Rückabdeckung (106) zum mechanischen Stützen der Matrix (102) von farbsteuerbaren, Licht emittierenden Einheiten und zum Abdecken der Seite (108) der Matrix (102) von farbsteuerbaren, Licht emittierenden Einheiten gegenüber der Seite der transparenten Abdeckung (104), wobei die Matrix (102) von farbsteuerbaren, Licht emittierenden Einheiten zwischen der zumindest teilweise transparenten Abdeckung (104) und der Rückabdeckung (106) verschränkt ist,
**dadurch gekennzeichnet, dass** die Rückabdeckung (106) ein Fahrzeugquerträger (106) des Fahrzeugs ist.

2. Anzeigevorrichtung (100) nach Anspruch 1, wobei der Fahrzeugquerträger (106) angepasst ist zum Absorbieren von Aufprallenergie im Falle einer Kollision.

3. Anzeigevorrichtung (100) nach einem der Ansprüche 1 und 2, wobei der Fahrzeugquerträger (106) dazu angepasst ist, von Seite zu Seite (408, 410) im Fahrzeug (400) zu reichen.

4. Anzeigevorrichtung (100) nach einem der vorhergehenden Ansprüche, wobei die Matrix (102) von farbsteuerbaren, Licht emittierenden Einheiten dazu angepasst ist, im Wesentlichen die gesamte Breite (w) des Fahrzeugquerträgers (106) in der Seite-zu-Seite-Richtung (408, 410) des Fahrzeugs (400) zu erreichen.

5. Anzeigevorrichtung (100) nach einem der vorhergehenden Ansprüche, wobei der Fahrzeugquerträger (106) einen Rahmen (112) umfasst, der dazu angepasst ist, die Peripherie der Matrix (102) von farbsteuerbaren, Licht emittierenden Einheiten zu umgeben.

6. Anzeigevorrichtung (100) nach einem der vorhergehenden Ansprüche, wobei der Fahrzeugquerträger (106) eine Vertiefung zum Aufnehmen der Matrix (102) von farbsteuerbaren, Licht emittierenden Einheiten umfasst.

7. Anzeigevorrichtung (100) nach einem der vorhergehenden Ansprüche, wobei eine Form des Fahrzeugquerträgers (106) im Wesentlichen mit einer Form der Matrix (102) von farbsteuerbaren, Licht emittierenden Einheiten an der Kontaktfläche zwischen dem Fahrzeugquerträger (106) und der Matrix (102) von farbsteuerbaren, Licht emittierenden Einheiten übereinstimmt.

8. Anzeigevorrichtung (100) nach einem der vorhergehenden Ansprüche, wobei die Matrix (102) von farbsteuerbaren, Licht emittierenden Einheiten direkt am Fahrzeugquerträger befestigt ist.

9. Anzeigevorrichtung (100) nach einem der vorhergehenden Ansprüche, umfassend am Fahrzeugquerträger befestigte Kühlflansche (136).

10. Anzeigevorrichtung (100) nach einem der vorhergehenden Ansprüche, wobei der Fahrzeugquerträger ein einzelnes Stück ist.

11. Anzeigevorrichtung (100) nach einem der vorhergehenden Ansprüche, wobei die Matrix (102) von farbsteuerbaren, Licht emittierenden Einheiten eine Flüssigkristallanzeige oder eine Leuchtdiodenanzeige ist.

12. Fahrzeug (400), umfassend die Anzeigevorrichtung (100) nach einem der vorhergehenden Ansprüche.

## Revendications

1. Dispositif d'affichage (100) pour un habitacle de véhicule, le dispositif d'affichage comprenant :
une matrice (102) d'unités électroluminescentes commandables en couleur couvertes par un couvercle au moins partiellement transparent (104) ; et
un couvercle arrière (106) destiné à supporter mécaniquement la matrice (102) d'unités électroluminescentes commandables en couleur, et destiné à couvrir le côté (108) de la matrice (102) d'unités électroluminescentes commandables en couleur opposé au côté du couvercle transparent (104), moyennant quoi la matrice (102) d'unités électroluminescentes commandables en couleur est intercalée entre le couvercle au moins partiellement transparent (104) et le couvercle arrière (106), **caractérisé en ce que**
le couvercle arrière (106) est une traverse de voiture (106) du véhicule.

2. Dispositif d'affichage (100) selon la revendication 1, dans lequel la traverse de voiture (106) est adaptée pour absorber de l'énergie d'impact dans le cas d'une collision.

3. Dispositif d'affichage (100) selon l'une quelconque des revendications 1 et 2, dans lequel la traverse de voiture (106) est adaptée pour aller d'un côté à l'autre (408, 410) dans le véhicule (400).

4. Dispositif d'affichage (100) selon l'une quelconque des revendications précédentes, dans lequel la matrice (102) d'unités électroluminescentes commandables en couleur est adaptée pour couvrir sensiblement la largeur entière (w) de la traverse de voiture (106) dans la direction allant d'un côté à l'autre (408, 410) du véhicule (400).

5. Dispositif d'affichage (100) selon l'une quelconque des revendications précédentes, dans lequel la traverse de voiture (106) inclut un cadre (112) adapté pour entourer la périphérie de la matrice (102) d'unités électroluminescentes commandables en couleur.

6. Dispositif d'affichage (100) selon l'une quelconque des revendications précédentes, dans lequel la traverse de voiture (106) inclut un évidement destiné à recevoir la matrice (102) d'unités électroluminescentes commandables en couleur.

7. Dispositif d'affichage (100) selon l'une quelconque des revendications précédentes, dans lequel une forme de la traverse de voiture (106) correspond sensiblement à une forme de la matrice (102) d'unités électroluminescentes commandables en couleur à l'interface entre la traverse de voiture (106) et la matrice (102) d'unités électroluminescentes commandables en couleur.

8. Dispositif d'affichage (100) selon l'une quelconque des revendications précédentes, dans lequel la matrice (102) d'unités électroluminescentes commandables en couleur est directement fixée à la traverse de voiture.

9. Dispositif d'affichage (100) selon l'une quelconque des revendications précédentes, comprenant des ailettes de refroidissement (136) fixées à la traverse de voiture.

10. Dispositif d'affichage (100) selon l'une quelconque des revendications précédentes, dans lequel la traverse de voiture est monobloc.

11. Dispositif d'affichage (100) selon l'une quelconque des revendications précédentes, dans lequel la matrice (102) d'unités électroluminescentes commandables en couleur est un écran à cristaux liquides, ou un écran à diodes électroluminescentes.

12. Véhicule (400), comprenant le dispositif d'affichage (100) selon l'une quelconque des revendications précédentes.
